# EUROPEAN PATENT APPLICATION

(11) **EP 1 138 845 A1**
(43) Date of publication of application: **04.10.2001**
(21) Application number: 99961292.2
(22) Date of filing: 10.12.1999
(51) Int. Cl.: E04C 2/02, D21J 1/00, C01B 13/14, E04F 15/024

(54) **COMPOSITE BUILDING MATERIAL**

(30) Priority: 11.12.1998 JP 35258698; 12.02.1999 JP 3479699
(71) Applicant: IBIDEN CO., LTD., Ogaki-shi Gifu-ken 503-0917 (JP)
(72) Inventor: MATSUNO, Yoshimi, Ibi-gun, Gifu 501-0695 (JP); OGAWA, Tetsuj, Ibi-gun, Gifu 501-0695 (JP); SATOU, Kenji, Ibi-gun, Gifu 501-0695 (JP); NOMURA, Toshihiro, Ibi-gun, Gifu 501-0695 (JP)
(74) Representative: Hill, Christopher Michael
(86) International application number: JP9906970
(87) International publication number: WO0036242

(57) **Abstract**

This invention provides considerably excellent strength and nail striking property in composite building materials, i.e. composite building materials provided on at least one surface of a core member with a composite layer consisting of fibrous substrate and resin, wherein the core member contains an inorganic amorphous body and fibrous materials are included in the inorganic amorphous body.

## Description

### TECHNICAL FIELD

This invention relates to composite building materials having high performances and a low cost and serving to environment protection.

### BACKGROUND ART

Floor members for so-called OA floor setting up computers and the like are required to be durable to the weight of the computer and to be not damaged through shock even if the computer or the like is fallen down due to earthquake. Furthermore, they are required to have an excellent fire resistance durable to cable fire because cable wirings are arranged below the floor.

As regards building materials being light in the weight and excellent in the fire resistance and workability, JP-A-7-329236 proposes a non-combustible material formed by adhering a prepreg of a thermoplastic resin to a gypsum board. In the technique described in JP-A-7-329236, however, the thermoplastic resin prepreg and gypsum board are used, so that there is a problem that the strength is insufficient. And also, nails or the like can not be struck, and if the nail is forcibly struck, there is a disadvantage of causing the occurrence of crack.

And also, since the strength is insufficient, it can not be denied that the shock resistance is poor. For instance, when a decorative layer is formed on such a building material, there is a problem that strain is caused in the design of the decorative layer when shock such as striking or the like is applied to the building material.

Furthermore, it is favorable that a room setting OA instruments such as computer and the like, intensive care unit in a hospital or the like is covered with a wall member and floor member having an electromagnetic wave shielding layer so as not to affect the instruments in the room by noise of electromagnetic wave. When the electromagnetic wave shielding layer is applied to the building material of JP-A-7-329236, if shock such as striking or the like is applied to the building material, since the strength is low, the building material can not sufficiently protect the shielding layer, and hence the shielding layer is broken, which results in the occurrence of improper operation in the computer through, for example, noise of electromagnetic wave. Particularly, the floor member is easily broken, so that it is demanded to develop materials having an excellent shock resistance.

### DISCLOSURE OF THE INVENTION

It is, therefore, a first object of the invention to solve the aforementioned problems and to propose a composite building material having excellent strength and nail striking property.

It is a second object of the invention to propose a composite building material causing no strain in a design of a decorative layer through shock or the like even if the decorative layer is arranged.

It is a third object of the invention to propose a composite building material capable of advantageously utilizing an electromagnetic wave shielding layer by sufficiently enhancing a strength of a light-weight building material having excellent fire resistance and workability.

It is a fourth object of the invention to propose a composite building material having more improved fire resistance.

That is, the gist and construction of the invention are the following items 1 to 25.
1. A composite building material comprising a composite layer consisting of a fibrous substrate and a resin formed on at least one surface of a core member, characterized in that the core member comprises an inorganic amorphous body and fibrous materials are included in the inorganic amorphous body.
2. A composite building material comprising a composite layer consisting of a fibrous substrate and a resin formed on at least one surface of a core member, characterized in that the core member is shaped from inorganic amorphous powder made of an inorganic amorphous body through a binder.
3. A composite building material comprising a composite layer consisting of a fibrous substrate and a resin formed on at least one surface of a core member, characterized in that the core member includes an organic fibrous materials consisting of a polysaccharide.
4. A composite building material according to any one of the items 1 to 3, wherein a content of the resin in the composite layer is 20-200 parts by weight based on 100 parts by weight of the fibrous substrate.
5. A composite building material according to any one of the items 1 to 3, wherein a thickness of the composite layer is 0.1-3.5 mm.
6. A composite building material according to any one of the items 1 to 3, wherein a specific gravity of the composite layer is 0.5-3.9.
7. A composite building material according to any one of the items 1 to 3, wherein the composite layer contains an elastic high polymer.
8. A composite building material comprising a decorative layer formed on at least one surface of a core member, characterized in that the core member comprises an inorganic amorphous body and fibrous materials are included in the inorganic amorphous body.
9. A composite building material comprising a decorative layer formed on at least one surface of a core member, characterized in that the core member is shaped from inorganic amorphous powder made of an inorganic amorphous body through a binder.
10. A composite building material comprising a decorative layer formed on at least one surface of a core member, characterized in that the core member includes an organic fibrous materials consisting of a polysaccharide.
11. A composite building material according to any one of the items 8 to 11, wherein a reinforcing layer is formed between the core member and the decorative layer.
12. A composite building material according to any one of the items 8 to 11, wherein a thickness of the decorative layer is 0.1-10 mm.
13. A composite building material according to the item 11, wherein the reinforcing layer contains an elastic high polymer.
14. A composite building material according to the item 8 or 10, wherein the fibrous materials are oriented in a particular direction.
15. A composite building material comprising an electromagnetic wave shielding layer formed on at least one surface of a core member, characterized in that the core member comprises an inorganic amorphous body and fibrous materials are included in the inorganic amorphous body.
16. A composite building material comprising an electromagnetic wave shielding layer formed on at least one surface of a core member, characterized in that the core member is shaped from inorganic amorphous powder made of an inorganic amorphous body through a binder.
17. A composite building material comprising an electromagnetic wave shielding layer formed on at least one surface of a core member, characterized in that the core member includes an organic fibrous materials consisting of a polysaccharide.
18. A composite building material according to the item 15 or 17, wherein the fibrous materials are oriented in a particular direction.
19. A composite building material according to any one of the items 15 to 18, wherein the electromagnetic wave shielding layer is a metal foil.
20. A composite building material according to any one of the items 15 to 18, wherein the electromagnetic wave shielding layer is a composite sheet consisting of a conductive filler and a resin.
21. A composite building material comprising a paper adhered on at least one surface of a core member, characterized in that the core member comprises an inorganic amorphous body and fibrous materials are included in the inorganic amorphous body.
22. A composite building material comprising a paper adhered on at least one surface of a core member, characterized in that the core member is shaped from inorganic amorphous powder made of an inorganic amorphous body through a binder.
23. A composite building material comprising a paper adhered on at least one surface of a core member, characterized in that the core member includes an organic fibrous materials consisting of a polysaccharide.
24. A composite building material according to any one of the items 21 to 23, wherein the paper is a waterproof paper.
25. A composite building material according to the item 21 or 23, wherein the fibrous materials are oriented in a particular direction.

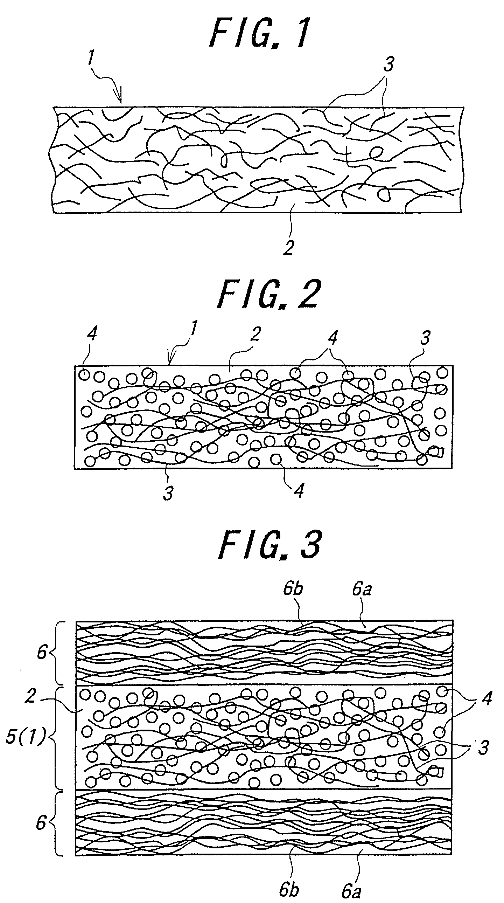

A structure of a composite hardened body constituting a typical. embodiment of a core member in the composite building material according to the invention is diagrammatically shown in Fig. 1. The composite hardened body 1 is fundamental to comprise an inorganic amorphous body 2 wherein fibrous materials 3 are included in the inorganic amorphous body 2. Moreover, the inorganic amorphous body is not particularly restricted, but is desirable to be an amorphous body consisting of two or more oxide system. The term "amorphous body consisting of two or more oxide system" used herein means an amorphous body of oxide (1) - oxide (2).... - oxide (n) system (wherein n is a natural number, and oxide (1), oxide (2) ... oxide (n) are different oxides).

Such an inorganic amorphous body is difficult to be correctly defined, but is considered to be an amorphous compound produced by subjecting two or more oxides to a solid solution, a hydration reaction or the like.

In such an inorganic amorphous compound, elements constituting the oxide (at least two selected from Al, Si, Ca, Na, Mg, P, S, K, Ti, Mn, Fe and Zn) are confirmed by a fluorescent X-ray analysis, and a harrow is observed within a range of 2θ: 15°-40° in a chart by an X-ray diffraction analysis. This harrow is a gentle undulation of X-ray intensity, which is observed as a broad upheavement in the X-ray chart. Moreover, a half-width value of the harrow is 26: not less than 2°.

The composite hardened body 1 can improve the value of bending strength and the shock resistance because the inorganic amorphous body 2 is a strength-developing substance and the fibrous materials 3 are dispersed in the inorganic amorphous powder 2 to improve the value of toughness at break. And also, there is no anisotropy in the strength, so that a homogenous hardened body is obtained. Furthermore, since it is an amorphous body, there is a merit that the sufficient strength is obtained at a low density.

Moreover, the reason why the amorphous body 2 changes into a strength-developing substance is not clear, but it is guessed that the growth of crack is obstructed as compared with the crystalline structure. Further, the fibrous materials are easy to be uniformly dispersed in the amorphous body as compared with the crystal body, so that it is considered to improve the value of toughness at break. As a result, crack is not created even when a nail is struck or a through-hole is formed, so that the composite hardened body becomes optimum as a material requiring works such as building material or the like.

As the oxide may be used oxides of metal and/or non-metal, which is desirable to be selected from Al₂O₃, SiO₂, CaO, Na₂O, MgO, P₂O₅, SO₃, K₂O, TiO₂, MnO, Fe₂O₃ and ZnO. Especially, an inorganic amorphous body of Al₂O₃-SiO₂-CaO system or Al₂O₃-SiO₂-CaO-oxide system, or a composite of these inorganic amorphous bodies is optimum. Moreover, the oxide in the latter inorganic amorphous body is one or more oxides of metal and/or non-metal other than Al₂O₃, SiO₂ and CaO.

Firstly, the inorganic amorphous body of Al₂O₃-SiO₂-CaO system is a compound having an amorphous structure produced by subjecting a whole or a part of each of Al₂O₃, SiO₂ and CaO to solid solution, hydration reaction or the like. That is, it is considered to include either of compounds produced by subjecting a combination of Al₂O₃ and SiO₂, SiO₂ and CaO, Al₂O₃ and CaO or Al₂O₃, SiO₂ and CaO to solid solution, hydration reaction or the like.

In such an inorganic amorphous compound, Al, Si and Ca are confirmed by a fluorescent X-ray analysis, and a harrow is observed within a range of 2θ: 15°-40° in a chart by an X-ray diffraction analysis. This harrow is a gentle undulation of X-ray intensity, which is observed as a broad upheavement in the X-ray chart. Moreover, a half-width value of the harrow is 2θ: not less than 2°.

And also, the inorganic amorphous body of a system added with at least one oxide in addition to Al₂O₃, SiO₂ and CaO, i.e. Al₂O₃-SiO₂-CaO- oxide system is considered to include either of compounds produced by subjecting a combination of Al₂O₃ and oxide, SiO₂ and oxide, CaO and oxide, Al₂O₃, SiO₂ and oxide, SiO₂, CaO and oxide, Al₂O₃, CaO and oxide or Al₂O₃, SiO₂, CaO and oxide in addition to the above combination in Al₂O₃-SiO₂-CaO system to solid solution, hydration reaction or the like.

Moreover, in case of the amorphous body of two or more oxides or Al₂O₃-SiO₂-CaO-oxide (1) .....- oxide (n) system (n is a natural number of not less than 2), it is considered to include either of compounds produced by subjecting a combination of these oxides, for example, at least two oxides selected from oxide (1), oxide (2)...... oxide (n) (n is a natural number of not less than 2, and oxide (n) means different oxide when the value of n is different and excludes Al₂O₃, SiO₂ and CaO) to solid solution, hydration reaction or the like, compounds produced by subjecting a combination of at least two selected from Al₂O₃, SiO₂ and CaO to solid solution, hydration reaction or the like, and further compounds produced by subjecting a combination of at least one selected from oxide (1), oxide (2).... oxide (n) (n is a natural number of not less than 2) and at least one selected from Al₂O₃, SiO₂ and CaO to solid solution, hydration reaction or the like.

In such an inorganic amorphous compound, Al, Si, Ca and further elements constituting the oxide (two or more selected from Na, Mg, P, S, K, Ti, Mn, Fe and Zn) are confirmed by a fluorescent X-ray analysis, and a harrow is observed within a range of 2θ: 15°-40° in a chart by an X-ray diffraction analysis. This harrow is a gentle undulation of X-ray intensity, which is observed as a broad upheavement in the X-ray chart. Moreover, a half-width value of the harrow is 2θ: not less than 2°.

In this case, the oxide to be combined with Al₂O₃, SiO₂ and CaO is one or more and can use oxide of metal and/or non-metal other than Al₂O₃, SiO₂ and CaO. For example, there can be selected from Na₂O, MgO, P₂O₅, SO₃, K₂O, TiO₂, MnO, Fe₂O₃ and ZnO. This selection can be carried out based on properties expected in the core member and hence the building material.

For instance, Na₂O or K₂O can be removed with an alkali or the like, so that when the removal treatment is carried out prior to a plating treatment, the surface of the core member to be plated can be roughened to act as an anchor for plating.

MgO contributes to develop strength as a solid solution with Al₂O₃, SiO₂ and CaO to largely improve the bending strength and shock resistance.

P₂O₅ can improve the adhesion property to metal and is particularly useful when a metal layer is directly adhered to the core member.

SO₃ is suitable as an antibacterial building material because it has an antibacterial property.

TiO₂ is a white coloring matter and acts as a photo-oxidation catalyst, so that an adhered organic contaminant substance can be forcibly oxidized and cleaned only by irradiating a light. Therefore, it has a peculiar effect capable of using as a self-cleanable building material.

MnO is useful as a darkish coloring matter, and Fe₂O₃ is useful as a bright coloring matter, and ZnO is useful as a white coloring matter.

Moreover, these oxides may be existent in the amorphous body alone.

The above amorphous body is preferable to have a composition converted into each of Al₂O₃, SiO₂ and CaO that Al₂O₃: 3-51% by weight per total weight of the composite hardened body, SiO₂: 5-53% by weight per total weight of the composite hardened body and CaO: 6-63% by weight per total weight of the composite hardened body, and a sum of three oxides does not exceeds 100% by weight.

Because, when the content of Al₂O₃ is less than 3% by weight or exceeds 51% by weight, the strength of the core member lowers, while even when the content of SiO₂ is less than 5% by weight or exceeds 53% by weight, the strength of the core member lowers. And also, when the content of CaO is less than 6% by weight or exceeds 63% by weight, the strength of the core member also lowers.

Further, in order to obtain a core member having a higher strength, it is advantageous to adjust a ratio of CaO/SiO₂ to 0.2-7.9 and a ratio of CaO/Al₂O₃ to 0.2-12.5, respectively, as converted into oxide.

When one or more of Na₂O, MgO, P₂O₅, SO₃, K₂O, TiO₂, MnO, Fe₂O₃ and ZnO are included as an oxide other than Al₂O₃, SiO₂ and CaO, a preferable content of each oxide is as follows. It is needless to say that the total content of these oxides does not exceeds 100% by weight.

| | |
|---|---|
| Na₂O: | 0.1-2.4% by weight per total weight of the core member |
| MgO: | 0.3-22.0% by weight per total weight of the core member |
| P₂O₅: | 0.1-14.6% by weight per total weight of the core member |
| SO₃: | 0.1-7.0% by weight per total weight of the core member |
| K₂O: | 0.1-2.4% by weight per total weight of the core member |
| TiO₂: | 0.1-17.4% by weight per total weight of the core member |
| MnO: | 0.1-3.0% by weight per total weight of the core member |
| Fe₂O₃: | 0.2-35.6% by weight per total weight of the core member |
| ZnO: | 0.1-3.6% by weight per total weight of the core member |

The reason why the contents of these oxides are limited to the above ranges is due to the fact that when they are outside the above ranges, the strength of the core member lowers.

It can be confirmed whether or not the compound has an amorphous structure by an X-ray diffractometry. That is, when a harrow is observed in a zone of 2θ: 15°-40° by the X-ray diffractometry, the compound can be confirmed to have an amorphous structure. In the invention, a crystal body may be included in the amorphous structure in addition to the complete amorphous structure. Concretely, there may be included hydrogen aluminum silicate, kaolinte, zeolite, Gehlenite,syn, Anorthite, Melitite, Gehlenite-synthetic, tobermorite, xonotlite or ettringite; or an oxide such as SiO₂, Al₂O₃, CaO, Na₂O, MgO, P₂O₅, SO₃, K₂O, TiO₂, MnO, Fe₂O₃, ZnO or the like: CaCO₃ (calcite) or the like.

Although these crystal bodies themselves are not considered to be a strength-developing substance, they are considered to have an effect that hardness and density are increased to improve the compression strength or to control the growth of crack, or the like. Moreover, the content of the crystal body is desirable to be 0.1-50% by weight per total weight of the core member. Because, when the crystal body is too small, the above effect is not obtained, while when it is too large, the strength lowers.

Incidentally, the crystalline compound of Al₂O₃-SiO₂ system is hydrogen aluminum silicate, kaolinite or zeolite, and the crystalline compound of Al₂O₃-CaO system is calcium aluminate, and the crystalline compound of CaO-SiO₂ system is calcium silicate, and the crystalline compound of Al₂O₃-SiO₂-CaO system is Gehlenite,syn or Anorthite, and the crystalline compound of Al₂O₃-SiO₂-CaO-MgO system is Melitite or Gehlenite-synthetic.

Further, the crystal body is desirable to contain Ca, and may include Gehlenite,syn (Ca₂Al₂O₇), Melitite-synthetic (Ca₂(Mg_{0.5}Al_{0.5})(Si_{1.5}Al_{0.5}O₇)), Gehlenite-synthetic (Ca₂(Mg_{0.25}Al_{0.75})(Si_{1.25}Al_{0.75}O₇)), Anorthite,ordered (Ca₂Al₂Si₂O₈), or calcium carbonate (calcite).

In the core member according to the invention, a halogen may be added to the inorganic amorphous body. This halogen serves as a catalyst in the reaction of forming a solid solution or a hydrate and also acts as a combustion controlling substance. The content is desirable to be 0.1-1.2% by weight per total weight of the amorphous body. Because, when it is less than 0.1% by weight, the strength is low, while when it exceeds 1.2% by weight, harmful substances are created by combustion. As the halogen, chlorine, bromine and fluorine are desirable.

Similarly, calcium carbonate (calcite) may be added. Calcium carbonate itself is not a strength-developing substance, but is considered to contribute to the increase of the strength because calcium carbonate is surrounded with the amorphous body to prevent the growth of crack or the like. The content of calcium carbonate is desirable to be not more than 48% by weight per total weight of the core member, because when it exceeds 48% by weight, the bending strength lowers. And also, it is desirable to be not less than 0.1% by weight. When the content is less than 0.1% by weight, it does not contribute to the increase of the strength.

Further, the addition of a binder is advantageous in view of more increase of strength and improvement of water resistance, resistance to chemicals and fire resistance. As the binder, it is desirable to be either a thermosetting resin or an inorganic binding agent or both. As the thermosetting resin, at least one resin selected from phenolic resin, melamine resin, epoxy resin and urea resin is desirable. As the inorganic binding agent, at least one selected from sodium silicate, silica gel and alumina sol is desirable.

Moreover, a thermosetting resin, for example, at least one thermosetting resin selected from phenolic resin, melamine resin, epoxy resin, urea resin and urethane resin may be applied onto the surface.

The fibrous material included in the inorganic amorphous body may be either organic or inorganic. As the organic fibrous material, at least one selected from chemical fibers such as vinylon, polypropylene, polyethylene and the like and organic fibrous material consisting of a polysaccharide can be used, but the organic fibrous material consisting of a polysaccharide is desirable. Because, the polysaccharide has OH group and easily bonds to various compounds such as Al₂O₃, SiO₂, CaO and the like through hydrogen bonding.

The polysaccharide is desirable to be at least one compound selected from amino sugar, uronic acid, starch, glycogen, inulin, lichenin, cellulose, chitin, chitosan, hemicellulose and pectin. As the organic fibrous material consisting of these polysaccharides, pulp, pulp dreg, pulverized mass of a wastepaper such as news paper, magazine or the like are advantageously adaptable.

Moreover, the pulp contains about 10-30% by weight of lignin in addition to cellulose.

At least one selected from alumina whisker, SiC whisker, silica-alumina based ceramic fiber, glass fiber, carbon fiber and metal fiber can be used as the inorganic fibrous material.

Moreover, the content of the fibrous material is desirable to be 2-75% by weight per total weight of the composite hardened body. When the content is less than 2% by weight, the strength of the core member lowers, while when it exceeds 75% by weight, there is feared the lowering of fire protecting property, water resistance, dimension stability and the like.

Furthermore, an average length of the fibrous material is desirable to be 10-3000 µm. When the average length is too short, the entanglement is not caused, while when it is too long, gap is apt to be created to lower the strength of the inorganic hardened body.

As the core member, there are recommended ones obtained by drying an industrial waste and aggregation-curing it, and one obtained by drying and aggregation-curing a paper-making sludge (scum) is particularly optimum. That is, the paper-making sludge is a pulp dreg containing inorganic mass, and is low in the cost for using the industrial waste as a starting material, and contributes to the solution of environmental problems. Further, the paper-making sludge itself has a function as a binder, so that there is a merit that a desired shape can be formed by kneading with the other industrial waste. Especially, the wastepaper of high-grade paper contains a great amount of calcium based crystal such as kaoline, calcium carbonate or the like, so that a sludge containing a great amount of the wastepaper is suitable as the paper-making sludge.

The above paper-making sludge (scum) contains water and at least one selected from oxides and hydroxides of Al, Si, Ca, Na, Mg, P, S, K, Ti, Mn, Fe and Zn or a sol as a precursor thereof, or a composite thereof, halogen and calcium carbonate in addition to the pulp. Moreover, the halogen is desirable to be chlorine, bromine and fluorine.

Moreover, the water content in the paper-making sludge is desirable to be 20-80% by weight. When the water content is less than 20% by weight, the sludge is too hard and the shaping thereof is difficult, while when it exceeds 80% by weight, the sludge is rendered into a slurry and the shaping thereof is difficult.

In the invention, a specific gravity of the composite hardened body as the core member is desirable to be 0.2-2.2. When the specific gravity is less than 0.2, pores are too much and the strength of the composite hardened body lowers, while when the specific gravity exceeds 2.2, the influence of the inorganic amorphous body itself acting to the strength is too large and the reinforcing effect of the fibrous material relatively low and hence the strength lowers. That is, when the specific gravity is within a range of 0.2 to 2.2, practical compression strength and bending strength are obtained, so that such a range can be said to be a peculiar range for obtaining the strength.

As shown in Fig. 2, the inclusion of inorganic powder 4 into the composite hardened body 1 is advantageous to improve the fire resistance and to increase the strength by reacting with an amorphous body to form a strength-developing substance. By adjusting an amount of the inorganic powder can be adjusted the specific gravity of the composite hardened body.

And also, the composite hardened body 1 constituting another embodiment of the core member in the composite building material according to the invention is obtained by shaping an inorganic amorphous powder having an inorganic amorphous body made of at least two oxide system through a binder similar to the binder used in the first embodiment. In general, the inorganic amorphous body is high in the strength and toughness as compared with a crystal body, so that a composite hardened body having excellent compression strength and bending strength and hence a core member can be obtained by binding powder having such an inorganic amorphous body with a binder. Furthermore, the amorphous body is small in the density as compared with the crystal body, so that a light core member can be obtained by binding with the binder.

The amorphous body is defined as mentioned above and is advantageously adaptable as powder having an average particle size of 1-100 µm. That is, when the average particle size is too small or too large, sufficient strength as a core member is not obtained.

The inorganic powder is not particularly restricted, but an inorganic amorphous body consisting of tow or more oxide system is desirable, and particularly one obtained by firing an industrial waste is recommended, and especially one obtained by firing a paper-making sludge (scum) is optimum. That is, the paper-making sludge is a pulp dreg containing inorganic mass, and is low in the cost for using the industrial waste as a starting material, and contributes to the solution of environmental problems.

The paper-making sludge is desirable to be fired at not lower than 300°C but lower than 800°C. That is, crystalline body is easily formed above 800°C, while pulp is carbonized below 300°C and the powder can not be obtained. And also, amorphous powder can be obtained by heating the paper-making sludge at 300-1500°C and then quenching it.

Moreover, techniques using the paper-making sludge are found here and there, but they are different from the invention in the technical idea. That is, JP-A-49-86438 discloses a technique of mixing and hot-pressing a pulp dreg (cellulose component) and a lime dreg, but the pulp dreg means a cellulose and does not correspond to the utilization of inorganic component in the paper-making sludge as defined in the invention and the dispersion of fibers in the inorganic amorphous body. Therefore, breakage is caused at the grain boundary of the lime dreg or the growth of crack can not be prevented, and there is remained a problem in the bending strength and compression strength. And also, the lime dreg is a crystalline body (calcium oxide) obtained by burning a paper-making pulp solution, which is clearly distinguished from the amorphous body according to the invention.

JP-A-7-47537, JP-A-7-69701, JP-A-6-293546 and JP-A-5-270872 are a composite technique of cement and inorganic reinforcing fibers, and JP-A-10-15923 is a technique of mixing a pulp sludge with a crystalline gypsum, and JP-A-49-2880 is a technique aiming at only fibers in the pulp waste, and JP-A-53-81388 discloses that fibers in the pulp dreg (fiber 15%, earth and sand 0.01%) are mixed with wood chips and shaped, respectively, which are different from the dispersion of fibrous materials into the inorganic amorphous body as defined in the invention.

JP-A-51-30088 is a technique of shaping a fired ash of a pulp waste and a light inorganic material, but the firing conditions and the like are not described and an amorphous fired ash can not bed obtained. JP-A-8-246400 is a technique of using wastepaper pulp itself instead of the paper-making sludge. JP-A-48-44349 is a technique of mixing a pulp waste containing organic mass and inorganic mass with a high polymer emulsion or the like, but the inorganic mass means silicon oxide, aluminum oxide and iron oxide and indicates substantially a metal oxide of each kind, which is different from a complicated amorphous system of two or more metal oxides as defined in the invention. JP-A-49-99524 is a ceramic formed substrate (polycrystalline body), which is different from the amorphous system as defined in the invention.

On the other hand, the binder is desirable to be either a thermosetting resin or an inorganic binding agent or both. As the thermosetting resin, at least one resin selected from phenolic resin, melamine resin, epoxy resin and urea resin is desirable. As the inorganic binding agent, at least one selected from sodium silicate, silica gel and alumina sol is desirable.

Further, a composite hardened body constituting the other embodiment of the core member in the composite building material according to the invention includes an organic fibrous material of a polysaccharide. Concretely, it is a composite hardened body consisting of inorganic powder and organic fibrous material made of a polysaccharide, or a composite hardened body of an inorganic amorphous body including organic fibrous material made of a polysaccharide therein.

In these composite hardened bodies, OH group is existent on the surface of the inorganic powder, in the inorganic amorphous body, or in the polysaccharide, so that hydrogen bond is formed between the inorganic powder and/or the inorganic amorphous body and the organic fibrous material or between the organic fibrous materials and hence the inorganic powder and/or the inorganic amorphous body and the organic fibrous material are complicatedly entangled and integrally united with each other. For this end, the strength can be ensured without cementing or using a reinforcing plate such as iron plate, and a core member having excellent workability and productivity is obtained.

In this case, the inorganic powder is desirable to be powder of industrial waste. A fired product of a paper-making sludge (scum) can be used. The paper-making sludge is a pulp dreg containing inorganic mass, so that inorganic powder is obtained by heating the sludge at 300-1500°C. Further, polished powder of polishing glass, pulverized dust of silica sand and the like may be used as the inorganic powder.

As the inorganic mass included in the inorganic powder, it is desirable to be at least one selected from silica, alumina, iron oxide, calcium oxide, magnesium oxide, potassium oxide, sodium oxide and phosphorus pentoxide. They are chemically stable and excellent in the weather resistance and have desirable properties as a building material.

Since sufficient strength is not obtained if the inorganic powder is too small or too large, it is favorable to use powder having an average particle size of 1-100 µm. And also, the content of the inorganic powder is desirable to be 10-90% by weight per total weight of the core member. When the content is too large, the core member becomes brittle, while when it is too small, the strength lowers, and in any case the strength lowers. Moreover, the aforementioned ones can be used as the inorganic amorphous body.

On the other hand, the polysaccharide is desirable to be at least one compound selected from amino sugar, uronic acid, starch, glycogen, inulin, lichenin, cellulose, chitin, chitosan, hemicellulose and pectin. The organic fibrous material consisting of these compounds has OH group and easily forms hydrogen bond with the inorganic powder and provides a fibrous shape. As such an organic fibrous material consisting of the polysaccharide, chip, pulp or pulp dreg obtained by pulverizing coniferous tree or broad-leaved tree.

The content of the organic fibrous material consisting of the polysaccharide is desirable to be 10-90% by weight per total weight of the core member. When the organic fibrous material is too large, the strength lowers, while when it is too small, the core member becomes brittle and the strength lowers. And also, the average length of the organic fibrous material consisting of the polysaccharide is favorable to be 10-1000 µm. Because, when the average length is too short, the entanglement of the fibrous materials is not caused, while when it is too long, the fibrous material can not uniformly be mixed with inorganic industrial waste and sufficient strength can not be obtained.

As the organic fibrous material consisting of the polysaccharide, the pulp or pulp dreg, particularly industrial waste are advantageous because they are low in the cost and contribute to solve environment problem. As such an industrial waste, there is an unfired product of a paper-making sludge (scum). The unfired paper-making sludge itself has a function as a binder, so that it can be shaped into a desired form by kneading with the inorganic powder. Moreover, the content of the organic fibrous material in the unfired product of the paper-making sludge can be adjusted within a range of 5-85% by weight per total solid content.

Further, a binder may be added in addition to the inorganic powder and the organic fibrous material consisting of the polysaccharide because the water resistance and the value of toughness at break can be improved by the binder. As the binder can be used the aforementioned thermosetting resin or inorganic binding agent, and the content thereof is desirable to be 3-20% by weight.

In the embodiment of Fig. 2, the inorganic amorphous body 2 serves as a binder.

Next, the composite building material according to the invention as shown in Fig. 3 is a composite building material comprising a reinforcing layer 6 as a composite layer consisting of a resin 6a and a fibrous substrate 6b formed on at least one surface of a core member 5, both surfaces thereof in the illustrated embodiment, characterized in that any composite hardened bodies 1 as previously mentioned are applied to the core member 5. That is, when the core member 5 is made of any composite hardened body 1, even if tensile force is applied to the composite building material, since the core member 5 itself is excellent in the bending strength, the breakage is not easily caused. And also, even if pressure is locally applied to the surface, there is caused no recess or depression.

Further, by arranging the reinforcing layer 6 as the composite layer on the surface of the core member 5 can be controlled the breakage in a stress-concentrated portion to more increase the value of the bending strength and the compression strength can be more improved.

And also, in use of the composite building material according to the invention, a painting or a decorative layer of a decorative plate, decorative panel or the like may be arranged on the reinforcing layer 6. Thus, the shock resistance is improved, and fault such as recess or the like is hardly formed, and there is not caused the lowering of design in the decorative surface through strain due to the fault.

As the resin 6a in the composite layer constituting the reinforcing layer, it is desirable to use a thermosetting resin. That is, the thermosetting resin is excellent in the fire resistance different from a thermoplastic resin and is not softened even at a higher temperature, so that it does not lose the function as the reinforcing layer.

Moreover, when the organic fibrous material is included in the core member 5, the thermosetting resin constituting the reinforcing layer 6 chemically bonds to the organic fibrous material constituting the core member 5, so that the adhesion property between the composite layer and the core member is superior to the case that the composite layer is arranged on the surface of the inorganic substrate such as gypsum board.

As the thermosetting resin used in the resin 6a, phenolic resin, melamine resin, epoxy resin, polyimide resin, urea resin and so on are suitable. The content of the thermosetting resin in the reinforcing layer 6 is desirable to be a range of 20 parts by weight to 200 parts by weight based on 100 parts by weight of the fibrous substrate. In such a range, sufficient rigidity and shock resistance are obtained and a high fire resistance can be maintained.

Moreover, the content of the thermosetting resin is more preferably within a range of 40 parts by weight to 120 parts by weight based on 100 parts by weight of the fibrous substrate. When the content is too large, the reinforcing layer 6 becomes heavier, while when it is too small, the reinforcing effect becomes smaller.

On the other hand, as the fibrous substrate 6b constituting the reinforcing layer 6, it is desirable to use inorganic fibers. Because, the inorganic fiber increases the strength of the reinforcing layer 6 and decreases a thermal expansion coefficient. As the inorganic fiber, one or more of glass fiber, rock wool, ceramic fiber, glass fiber chopped strand mat, glass fiber roving cloth, glass fiber continuance strand mat and glass fiber paper are used in view of low cost and excellent heat resistance and strength.

The fibrous substrate 6b may be a mat of discontinuous fibers, a mat used by cutting a continuously elongated fiber at 3-7 cm (so-called chopped strand mat), a substrate obtained by making an aqueous dispersion into a sheet, a mat obtained by helically laminating a continuously elongated fiber, or a woven fabric of a continuously elongated fiber.

Furthermore, the thickness of the reinforcing layer 6 is desirable to be 0.1 mm to 3.5 mm. When it is set to the above range, sufficient rigidity and shock resistance are obtained and a high workability can be maintained.

Moreover, a flame retardant such as aluminum hydroxide, magnesium hydroxide or the like, and an inorganic binder usually used such as silica sol, alumina sol, water-glass or the like may be added to the reinforcing layer 6.

And also, the reinforcing layer 6 is desirable to contain an elastic high polymer. If the elastic high polymer is included, crack is not caused about a nail even when the nail is struck, and the elastic high polymer can ensure friction force to the surface of the nail to improve the holding force to the nail.

As the resin constituting the reinforcing layer 6, a resin composition consisting of the thermosetting resin and the elastic high polymer for giving a force durable to the nail is desirable. That is, it is a dispersion of an emulsion of the elastic high polymer into a solution of an uncured thermosetting resin. When such a resin is cured, "island" of the elastic high polymer is dispersed in "sea" of the thermosetting resin matrix, whereby the strength of the resin is ensured and the toughness can be provided.

The elastic high polymer is desirable to be rubbery latex, acrylic latex, acrylate latex or urethane latex. These latexes can be dispersed into the uncured thermosetting resin solution in a liquid form. Since the thermosetting resin and the elastic high polymer are liquid, they are easily impregnated into the fibrous substrate.

As the rubbery latex, nitrile-butadiene rubber (NBR) and styrenebutadiene rubber (SBR) are suitable.

And also, the weight ratio as a solid content of the thermosetting resin to the elastic high polymer is desirable to be 95/5-65/35. When the amount of the thermosetting resin is too large, the toughness lowers and crack is easily caused to lower the holding force to the nail, while when the amount of the elastic high polymer is too large, the strength of the resin lowers and also the holding force to the nail lowers. In order to obtain t he sufficient holding force to the nail, the weight ratio as a solid content of thermosetting resin to elastic high polymer is optimum to be 95/5-65/35.

There is described production method of the composite building material according to the invention below.

At first, the core member 5 is produced as follows.

### 1. First production method

The composition hardened body 1 as the core member 5 is produced by aggregation-curing an unfired paper-making sludge (scum). Such an aggregation-curing may simultaneously be carried out together with the formation of the reinforcing layer 6 consisting of fibrous substrate and resin.

As the paper-making sludge, it is desirable to use a paper-making sludge discharged in the paper-making of printing-information paper, kraft paper, titanium paper, facial paper, tissue paper, toilet paper, sanitary paper, toweling paper, various industrial papers or various domestic papers. As a commercially available paper-making sludge, there can be used "Cyclone Ash", "Green sludge" and the like handled by Maruto Yozai-sha.

### 2. Second production method

An inorganic amorphous powder having an amorphous structure is obtained by firing the paper-making sludge at not lower than 300°C but lower than 800°C or by firing at 300-1500°C and then quenching. Then, the inorganic amorphous powder is shaped into a sheet by binding with a binder. The binder used is desirable to be a thermosetting resin and/or an inorganic binding agent.

As the thermosetting resin is desirable at least one resin selected from phenolic resin, melamine resin, epoxy resin and urea resin. As the inorganic binding agent is desirable at least one selected from sodium silicate, silica gel and alumina sol.

Further, an unfired paper-making sludge may be used as the binder.

When the composite hardened body 1 as the core member 5 is formed by binding the inorganic amorphous powder with the binder, such a formation may simultaneously be carried out with the formation of the reinforcing layer 6.

### 3. Third production method

The inorganic powder is mixed with the organic fibrous material at dry state or wet state. In this mixing, the aforementioned binder may be added, if necessary.

When the unfired paper-making sludge is used as the organic fibrous material consisting of a polysaccharide, it acts as a binder and has a merit that the wet mixing is easy because it has a hydration property.

This mixture is shaped into a sheet by a conventionally known method such as cylinder paper method, Fourdrinier paper method, dehydration press method, extrusion shaping method or the like and dried, or it is pushed by rolls while transferring through a conveyor to form a sheet-shaped body. Then, the sheet-shaped body is dried by heating and press-tightened to form a core member 5. The heating temperature is 80-160°C, and the pressure is 1-20 kgf/cm².

The term "press-tightening" means the holding under a pressure. By such a press-tightening is oriented the fibrous materials in a direction perpendicular to the pressure direction. Since water can be removed by the pressurization, there can be prevented the excessive progress of crystallization due to the entrapment of water, so that an amorphous body can properly be formed. And also, the bending strength can be increased by the orientation.

Then, the composite building material is, for example, produced as follows.

As described in the production method of the core member 5, a sheet-shaped body is first obtained by shaping the paper-making sludge into a sheet through the first production method, or by binding the inorganic amorphous powder with the binder and shaping into a sheet through the second production method, or by shaping the mixture into a sheet through the third production method.

On the other hand, the resin is impregnated into the fibrous substrate and heated at 25-70°C and dried to form a reinforcing sheet.

Then, the sheet-shaped body and the reinforcing sheet are laminated one upon the other and press-tightened while heating to form a composite building material consisting of a core member 5 and a reinforcing layer 6. The heating temperature is 80-200°C, and the pressure is 1-20 kgf/cm².

Moreover, a method wherein a resin composition is impregnated into a mat of inorganic fibers and dried and shaped into a reinforcing layer 6 by curing a thermosetting resin through hot pressing and the reinforcing layer 6 is adhered to a previously cured core member 5 with an adhesive can be used instead of the above production method.

And also, there can be adopted a method wherein a thermosetting resin such as phenolic resin or the like is coated onto surfaces of fibers such as glass fiber, rock wool or ceramic fiber at a separate step and a fibrous substrate of these fibers is laminated on a sheet-shaped body and then hot pressed. In the method of coating the fiber surface with the thermosetting resin at a separate step, the adhesion property to the impregnated resin is improved and also the fibers are easily adhered to each other and the impregnating ratio of the resin can advantageously be improved.

As such a coating method, there are a method wherein the uncured thermosetting resin is impregnated into the fibrous substrate and dried, a method wherein a starting melt for glass fiber, rock wool or ceramic fiber is discharged through a nozzle and shaped into fibers through a blowing process or a centrifugal process and at the same time a solution of thermosetting resin such as phenolic resin or the like is sprayed to gather the fibers and the like.

When the glass fiber, rock wool or ceramic fiber is used as a material constituting the fibrous substrate, it may be coated with a silane coupling agent.

The thus obtained composite building material may be subjected to a painting on its front and rear surfaces, or may be adhered with a decorative plate or a decorative panel through an adhesive.

The painting is carried out by printing or spraying various pigments, an ink or the like. As the decorative plate, use may be made of a decorative plate of three layer structure consisting of a phenolic resin impregnated core layer, a melamine resin impregnated pattern layer and a melamine resin impregnated overlay layer, and a decorative plate of four layer structure consisting of a melamine resin impregnated backer layer, a phenolic resin impregnated core layer, a melamine resin impregnated pattern layer and a melamine resin impregnated overlay layer. Particularly, the decorative plate having the phenolic resin impregnated core layer as a core layer can be applied to a floor member or the like because the surface strength becomes considerably high.

As the decorative panel, high-grade woods of cryptomeria, cypress and the like can be used.

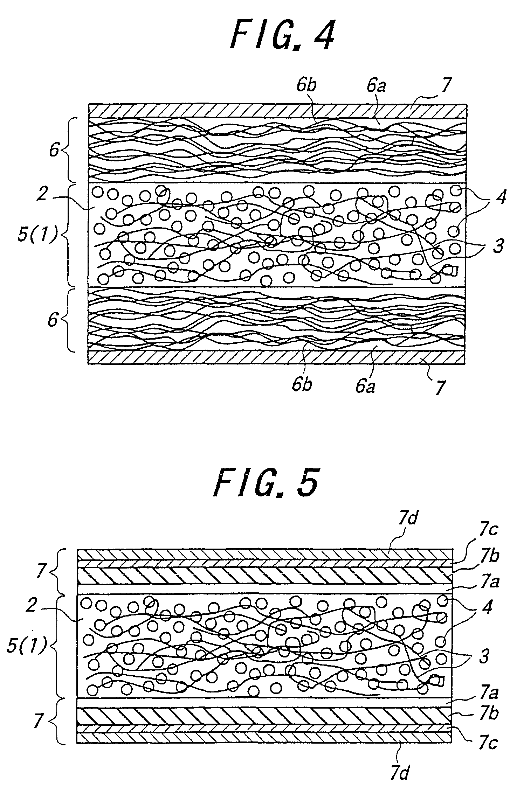

Then, another composite building materials according to the invention are shown in Figs. 4 and 5.

That is, the composite building material shown in Fig. 4 comprises a core member 1, a decorative layer 7 arranged on each of front and rear surfaces of the core member 5 and made of a decorative panel, and a reinforcing layer 6 interposed between the core member 5 and the decorative layer 7.

The core member 5 includes an amorphous body 2, and organic fibrous materials 3 and inorganic powder 4 are included in the amorphous body 2, while the reinforcing layer 6 is made of a fibrous substrate 6b impregnated with a resin 6a.

And also, the composite building material shown in Fig. 5 comprises a core member 5 and a decorative layer 7 arranged on each of the front and rear surfaces of the core member 1 likewise the above case, and the decorative layer 7 consists of a backer layer 7a, a core layer 7b, a pattern layer 7c and an overlay layer 7d.

Even in these composite building materials, the amorphous body 2, fibrous materials 3 and inorganic powder 4 and further reinforcing layer 6 are the same as previously mentioned.

As the decorative layer 7 applied to the above composite building material, use may be made of at least one resin-based decorative layer selected from a melamine resin paint, a melamine resin impregnated paper, a vinyl chloride resin film, a urethane resin paint, a polyacrylurethane, a vinyl fluoride resin film and decorative plate thereof; natural wood plate (rose, teak, pine, shelf, Japanese oak, cryptomeria), natural stone, artificial stone, carpet, vinyl chloride tile, cloth carpet, decorative plywood, tatami mat and the like.

As the decorative plate, use may be made of a decorative plate of three layer structure consisting of a phenolic resin impregnated core layer, a melamine resin impregnated pattern layer and a melamine resin impregnated overlay layer, and a decorative plate of four layer structure consisting of a melamine resin impregnated backer layer, a phenolic resin impregnated core layer, a melamine resin impregnated pattern layer and a melamine resin impregnated overlay layer. Particularly, the decorative plate having the phenolic resin impregnated core layer as a core layer can be applied to a floor member or the like because the surface strength becomes considerably high.

Moreover, the thickness of the decorative layer is desirable to be 0.1 mm - 10 mm. When it is less than 0.1 mm, the decorative layer is easily suffered, while when it exceeds 10 mm, the material becomes too heavy.

In the composite building material according to the invention, it is desirable to form the reinforcing layer between the core member and the decorative layer, and particularly it is desirable to form the reinforcing layer consisting of the resin and the fibrous substrate. By forming the reinforcing layer can be more improved the shock resistance of the composite building material, so that it is possible to apply the building material to a floor material requiring a severer durability.

The production method of the above composite building materials will be described below.

Firstly, the core member can be produced by the aforementioned first method, second method and third method.

Then, the decorative layer is arranged on the core member. As a method of forming the decorative layer, there are the following methods.

### Painting

The painting is carried out by printing or spraying various pigments, inks, resins and the like.

### Lamination

The lamination is carried out by piling a resin impregnated paper of B-stage, obtained by impregnating an uncured resin into a kraft paper or the like, on a core member or a sheet-shaped body as mentioned later and then heating and pressing.

### Adhesion

The carpet, tatami mat, decorative plywood or the like is adhered to the core member with an adhesive. As the adhesive, it is desirable to use a thermosetting resin such as an epoxy resin, a phenolic resin or the like, or vinyl acetate.

When the reinforcing layer is arranged between the core member and the decorative layer, it is produced as follows.

Firstly, as described on the production method of the core member, a sheet-shaped body is obtained by shaping the paper-making sludge into a sheet through the first production method, by binding the inorganic amorphous powder with a binder and shaping into a sheet through the second production method, or by shaping the mixture into a sheet through the third production method.

On the other hand, the reinforcing sheet is formed, for example, by subjecting the fibrous substrate impregnated with the resin to a heating treatment at 25-70°C and drying it.

Then, the sheet-shaped body and reinforcing sheet are laminated one upon the other and press-tightened while heating to form a composite building material consisting of the core member and the reinforcing layer. The heating temperature is 80-200°C, and the pressure is suitable to be 1-20 kgf/cm². The term "press-tightening" used herein means the holding under pressure.

Moreover, a method wherein a resin composition is impregnated in a mat of inorganic fibers and dried and hot pressed to cure a thermosetting resin to thereby form a reinforcing layer and then the reinforcing layer is adhered to a previously hardened core member with an adhesive can be used instead of the above production method.

And also, there can be adopted a method wherein a thermosetting resin such as a phenolic resin or the like is separately coated onto surfaces of fibers such as glass fiber, rock wool or ceramic fiber and a fibrous substrate comprised of these fibers is laminated on a sheet-shaped body and then hot pressed. In the method of coating the thermosetting resin on the fiber surfaces at a separate step, the adhesion property to the impregnated resin is improved, and also the fibers are easily adhered with each other and further the impregnating ratio of the resin can advantageously be improved.

As such a coating method, there are a method wherein an uncured thermosetting resin is impregnated into the fibrous substrate and then dried, and a method wherein a starting melt for glass fiber, rock wool or ceramic fiber is discharged through a nozzle and fibered through a blowing process or a centrifugal process and at the same time a solution of a thermosetting resin such as phenolic resin or the like is sprayed thereto to gather the fibers.

Moreover, when the glass fiber, rock wool or ceramic fiber is used as a substance constituting the fibrous substrate, it is favorable to coat a silane coupling agent.

The thus obtained composite building material may be subjected to a painting on its front and rear surfaces, or may be adhered with a decorative plate, a decorative panel or the like through an adhesive.

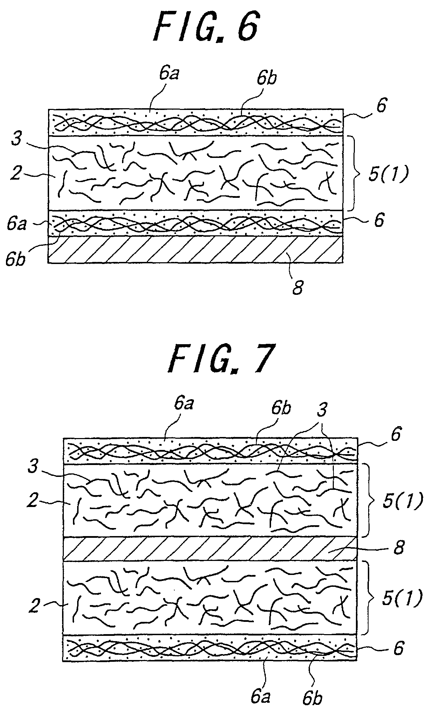

Further, the other composite building material according to the invention is shown in Fig. 6.

That is, the composite building material shown in Fig. 6 comprises a core member 5 containing an inorganic amorphous body 2 wherein fibrous materials 3 are included in the amorphous body 2, and an electromagnetic wave shielding layer 8 formed on at least one surface of the core member 5 or one of front and rear surfaces of a plate-shaped body because the core member 5 in the illustrated embodiment is a plate. The illustrated embodiment has a structure that the reinforcing layer 6 formed by impregnating the resin 6a into the fibrous substrate 6b is arranged on the front and rear surfaces of the core member 5 and the electromagnetic wave shielding layer 8 is formed on the reinforcing layer 6, but such a reinforcing layer 6 may be omitted.

Even in this composite building material, the amorphous body 2, fibrous materials 4 and inorganic powder 4 and further reinforcing layer 6 are the same as mentioned above.

In the above composite building material, it is essential to form the electromagnetic wave shielding layer on at least one surface of the core member. As the electromagnetic wave shielding layer, a metal foil is advantageously adaptable. The metal foil efficiently absorbs an electromagnetic wave but also is high in the strength, light in the weight and good in the workability. Concretely, it is favorable to use one or more of aluminum foil, copper foil, zinc foil, stainless steel foil, gold foil and silver foil. They have particularly a property effectively absorbing the electromagnetic wave. The thickness of the metal foil is favorable to be about 10-500 µm in view of the shielding property.

And also, a composite sheet consisting of a conductive filler and a resin may be used as the electromagnetic wave shielding layer. Such a composite sheet efficiently absorbs the electromagnetic wave but also is light in the weight, high in the workability and absorbs sound and vibration. The conductive filler included in the composite sheet is one or more powder selected from iron, copper, aluminum, stainless steel, brass, zinc, carbon and the like. On the other hand, each resin of phenol, epoxy, polyurethane, urea, polyester, polypropylene and polyethylene can be used as the resin. The thickness of the composite sheet is favorable to be about 0.5-5 mm in view of the shielding property.

Furthermore, the electromagnetic wave shielding layer may be formed by applying a conductive paint or the like in addition to the sheet-shaped product such as the metal foil, the composite sheet consisting of conductive filler and resin, or the like.

The electromagnetic wave shielding layer may be arranged on at least one surface of the core member, at least one of the front and rear surfaces when the core member is a plate-shaped body. In the building material, it is general to provide a decorative layer on the front surface, so that it is favorable to form the electromagnetic wave shielding layer on the rear surface.

And also, the electromagnetic wave shielding layer 8 may be embedded in the inside of the core member 5 as shown in Fig. 7. Concretely, the electromagnetic wave shielding layer 8 may be sandwiched between two core members 5. Even in this case, it is possible to omit the reinforcing layer 6 arranged on the front and rear surfaces of the core member 5.

Moreover, a surface of the electromagnetic wave shielding layer contacting with the core member (or reinforcing layer) may be subjected to a roughening treatment in order to improve the adhesion property to the core member (or reinforcing layer). In this roughening treatment, an arithmetically average roughness (Ra) is desirable to be, for example, about 0.1-100 µm.

The production method of the above composite building material will be described below.

Firstly, the core member can be produced by the aforementioned first production method, second production method and third production method. Then, the produced core member is rendered into a composite building material through subsequent step.

That is, when a reinforcing layer is arranged on the above obtained core member, there is provided a reinforcing sheet obtained by impregnating a resin into a fibrous substrate and heating at 25-70°C to conduct drying, and the reinforcing sheet and the sheet-shaped core member are piled one upon the other and press-tightened while heating. The heating temperature is 80-150°C and the pressure is 1-15 kgf/cm².

Moreover, a shaped body obtained impregnating a resin composition into a mat of inorganic fibers, drying and curing a thermosetting resin through a hot press is used as the reinforcing sheet, and such a sheet may be adhered to the previously shaped core member with an adhesive.

Further, there can be adopted a method wherein a thermosetting resin such as phenolic resin or the like is coated onto a fiber surface of glass fiber, rock wool or ceramic fiber at a separate stage and a fibrous substrate made of these fibers is laminated on a sheet-shaped core member to conduct hot pressing. In the method of coating the fiber surface with the thermosetting resin at the separate stage, the adhesion property to the impregnated resin is improved, and also the fibers are easily adhered to each other, and the impregnating ratio of the resin can advantageously be improved. As such a coating method, there is means for discharging a starting melt for the glass fiber, rock wool or ceramic fiber through a nozzle to form fibers through a blowing process or a centrifugal process and simultaneously spraying a solution of a thermosetting resin such as a phenolic resin or the like. Moreover, when the glass fiber, rock wool or ceramic fiber is used as a material constituting the fibrous substrate, it is favorable to be coated with a silane coupling agent.

Lastly, an electromagnetic wave shielding layer is arranged on at least one surface of the thus obtained laminate or front surface and rear surface of the core member alone. As the formation of the electromagnetic shielding layer, there are a method wherein one or more adhesive selected from phenolic resin, epoxy resin, resorcinol resin, melamine resin, urethane resin and vinyl acetate resin is applied onto a sheet constituting the electromagnetic wave shielding layer (metal foil or composite sheet) and/or a surface to be provided with the electromagnetic wave shielding layer and closing them and curing the adhesive, a method of applying a mixture of conductive filler and resin and the like, which are different in accordance with the materials.

Incidentally, it is possible to pain the surface or to attach a decorative plate or a decorative panel with an adhesive or the like as the building material. The painting is carried out by printing or spraying various pigments, an ink or the like. As the decorative plate, use may be made of a decorative plate of three layer structure consisting of a phenolic resin impregnated core layer, a melamine resin impregnated pattern layer and a melamine resin impregnated overlay layer, and a decorative plate of four layer structure consisting of a melamine resin impregnated backer layer, a phenolic resin impregnated core layer, a melamine resin impregnated pattern layer and a melamine resin impregnated overlay layer. Particularly, the decorative plate having the phenolic resin impregnated core layer as a core layer can be applied to a floor member or the like because the surface strength becomes considerably high. As the decorative panel, high-grade woods of cryptomeria, cypress and the like can be used.

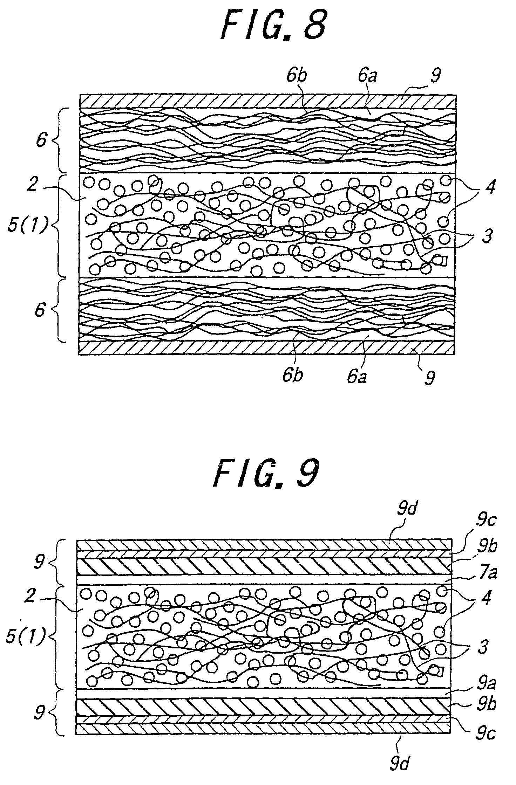

Furthermore, the other composite building materials according to the invention are shown in Figs. 8 and 9.

That is, the composite building material shown in Fig. 8 comprises a core member 5, a water-resistant paper layer 5 arranged on each of front and rear surfaces of the core member 5, and a reinforcing layer 6 interposed between the core member 1 and the paper layer 9. In this case, the core member 5 contains an amorphous body 2 wherein organic fibrous materials 3 and inorganic powder 4 are included in the amorphous body 2, and the reinforcing layer 6 is made of a fibrous substrate 6b impregnated with a resin 6a.

And also, the composite building material shown in Fig. 9 comprises a core member 5 and paper layers 9 arranged on both front and rear surfaces of the core member 5. In this case, the core member 5 contains an amorphous body 2 wherein organic fibrous materials 3 and inorganic powder 4 are included in the amorphous body 2, and the paper layer 9 consists of a backer layer 9a, a core layer 9b, a pattern layer 9c and an overlay layer 9d.

Even in any composite building materials, the amorphous body 2, fibrous materials 3 and inorganic powder 4 and further reinforcing layer 6 are the same as previously mentioned.

In these composite building materials, a paper is adhered onto at least one surface of the core member. By arranging such a paper layer can be further improved the shock resistance of the composite building material, so that it is possible to apply to a floor member requiring a severer durability.

As a paper adhered onto at least one surface of the core member, use may be made of a kraft paper, a titanium paper, a Japanese paper and the like in addition to the aforementioned paper provided on the surface with a decorative layer or a resin impregnated paper.

Particularly, the use of the resin impregnated paper can enhance the adaptability to floor member or the like because the surface strength becomes considerably high.

And also, the thickness of the paper is desirable to be 0.01-0.5 mm. When it is less than 0.1 mm, the paper is easily broken, while when it exceeds 0.5 mm, the weight becomes heavier.

Further, the paper is desirable to be a water-resistant paper. The use of the water-resistant paper can improve the water resistance of the composite building material according to the invention. In general, the water-resistant paper is obtained by such a sizing that spaces in the surface or the inside of the paper are clogged with a water-resistant glue (size agent). As such a size agent, use may be made of silicone, aliphatic acid, paraffin and the like.

In these composite building materials, a reinforcing layer may further be formed between the core member and the paper. In this case, it is particularly desirable to form the reinforcing layer consisting of resin and fibrous substrate. By arranging the reinforcing layer can be further improved the shock resistance of the composite building material, so that it is possible to apply to a floor member requiring a severer durability.

The production method of the above composite building materials will be described below.

Firstly, the core member can be produced by the aforementioned first production method, second production method and third production method. Then, a paper is attached onto one or both surfaces of the core member. As the attaching method of the paper, there are the following methods.

### ① Lamination

A resin impregnated paper of B-stage obtained by impregnating an uncured resin into a kraft paper or the like is piled on the core member or the following sheet-shaped body and laminated by heating under pressure.

### ② Adhesion

The water-resistant paper or the like is adhered to the core member with an adhesive. As the adhesive used, a thermosetting resin such as epoxy resin, phenolic resin or the like, and vinyl acetate are desirable.

Further, the formation of the reinforcing layer between the core member and the paper is carried out as follows.

Firstly, as described on the production method of the core member, a sheet-shaped body is obtained by shaping the paper-making sludge into a sheet through the first production method, by binding the inorganic amorphous powder with a binder and shaping into a sheet through the second production method, or by shaping the mixture into a sheet through the third production method.

On the other hand, the reinforcing sheet is formed, for example, by subjecting the fibrous substrate impregnated with the resin to a heating treatment at 25-70°C and drying it.

Then, the sheet-shaped body and reinforcing sheet are laminated one upon the other and press-tightened while heating to form a composite building material consisting of the core member and the reinforcing layer. The heating temperature is 80-200°C, and the pressure is suitable to be 1-20 kgf/cm². The term "press-tightening" used herein means the holding under pressure.

Moreover, a method wherein a resin composition is impregnated in a mat of inorganic fibers and dried and hot pressed to cure a thermosetting resin to thereby form a reinforcing layer and then the reinforcing layer is adhered to a previously hardened core member with an adhesive can be used instead of the above production method.

And also, there can be adopted a method wherein a thermosetting resin such as a phenolic resin or the like is separately coated onto surfaces of fibers such as glass fiber, rock wool or ceramic fiber and a fibrous substrate comprised of these fibers is laminated on a sheet-shaped body and then hot pressed. In the method of coating the thermosetting resin on the fiber surfaces at a separate step, the adhesion property to the impregnated resin is improved, and also the fibers are easily adhered with each other and further the impregnating ratio of the resin can advantageously be improved.

As such a coating method, there are a method wherein an uncured thermosetting resin is impregnated into the fibrous substrate and then dried, and a method wherein a starting melt for glass fiber, rock wool or ceramic fiber is discharged through a nozzle and fibered through a blowing process or a centrifugal process and at the same time a solution of a thermosetting resin such as phenolic resin or the like is sprayed thereto to gather the fibers.

When the glass fiber, rock wool or ceramic fiber is used as a substance constituting the fibrous substrate, it is favorable to coat a silane coupling agent.

The paper is laminated or adhered with the adhesive or the like onto the front surface and/or the rear surface of the thus obtained composite building material as mentioned above.

Moreover, the composite building materials according to the invention may be subjected to a working for the formation of a through-hole or the formation of a notch on a side face, if necessary.

### BRIEF DESCRIPTION OF THE DRAWINGS

Fig. 1 is a diagrammatically section view of an embodiment of the composite building material according to the invention;
Fig. 2 is a diagrammatically section view of an embodiment of the composite building material according to the invention;
Fig. 3 is a diagrammatically section view of an embodiment of the composite building material according to the invention;
Fig. 4 is a diagrammatically section view of an embodiment of the composite building material according to the invention;
Fig. 5 is a diagrammatically section view of an embodiment of the composite building material according to the invention;
Fig. 6 is a diagrammatically section view of an embodiment of the composite building material according to the invention;
Fig. 7 is a diagrammatically section view of an embodiment of the composite building material according to the invention;
Fig. 8 is a diagrammatically section view of an embodiment of the composite building material according to the invention;
Fig. 9 is a diagrammatically section view of an embodiment of the composite building material according to the invention; and
Fig. 10 is an X-ray diffraction chart of each of inorganic amorphous powders of Examples 1-2, 2-2, 3-2 and 4-2.

### BEST MODE FOR CARRYING OUT THE INVENTION

### [Example 1]

### (Example 1-1)

There is provided 1512 g of an unfired paper-making sludge ("Green sludge" handled by Maruto Yozai-sha, solid content: 34% by weight, water content: 66% by weight). Then, the paper-making sludge is dried at 100°C while transferring through a conveyor and applying a pressure of 3 kgf/cm² to form a plate-shaped composite hardened body having a thickness of 10 mm.

The thus obtained composite hardened body is confirmed to have the following composition as converted to oxides as a result of an analysis using a fluorescent X-ray analyzing apparatus (RIX2100, made by Rigaku). Moreover, the pulp is measured from the weight reduction amount after being fired at 1100°C.

| Account | | | |
|---|---|---|---|
| Pulp: | 51.4% by weight | SO₃ | 0.5% by weight |
| SiO₂ | 24.2% by weight | P₂O₅ | 0.2% by weight |
| Al₂O₃ | 14.0% by weight | Cl | 0.2% by weight |
| CaO | 8.0% by weight | ZnO | 0.1% by weight |
| MgO | 1.4% by weight | Others slight | |
| TiO₂ | 1.0% by weight | | |

On the other hand, 80% by weight of commercially available phenolic resin solution and an emulsion solution of 20% by weight of a latex as an elastic high polymer (solid content of SBR latex 49% by weight) are mixed at room temperature to obtain a liquid resin composition for providing a force durable to nail. Moreover, Nipol LX-436 made by Nippon Zeon Co., Ltd. is used as SBR latex.

Then, the above resin composition added with a curing agent is impregnated into a sheet-shaped glass fibers (impregnating amount converted to solid content 45%) and dried at a temperature of 80°C for 20 minutes to obtain a reinforcing sheet.

Further, the above phenolic resin solution is applied to front surface and rear surface of the above composite hardened body and dried at a temperature of 80°C for 20 minutes.

Finally, the above reinforcing sheets are piled on the front and rear surfaces of the composite hardened body and the laminate is pressed at a temperature of 110°C under a pressure of 7 kgf/cm² for 20 minutes to obtain a composite building material consisting of a core member 5 having a thickness of 10 mm and a reinforcing layer 6 having a thickness of 1 mm on each of front and rear surfaces.

### (Example 1-2)

There is provided 1512 parts by weight of an unfired paper-making sludge ("Green sludge" handled by Maruto Yozai-sha, solid content: 34% by weight, water content: 66% by weight). Then, the paper-making sludge is dried at 80°C with stirring and the dried mass is fired at 780°C for 5 hours and immediately quenched to room temperature. The fired product is pulverized in a ball mill to obtain 248 parts by weight of inorganic amorphous powder.

The thus obtained inorganic amorphous powder is confirmed to have the following composition as converted to oxides as a result of an analysis using a fluorescent X-ray analyzing apparatus (RIX2100, made by Rigaku).

| Account | | | |
|---|---|---|---|
| SiO₂ | 34.1% by weight | TiO₂ | 1.0% by weight |
| CaO | 21.3% by weight | SO₃ | 0.5% by weight |
| Al₂O₃ | 20.7% by weight | Cl | 0.2% by weight |
| Fe₂O₃ | 12.4% by weight | ZnO | 0.1% by weight |
| MgO | 5.9% by weight | Others slight | |
| P₂O₅ | 2.8% by weight | | |

Then, 248 parts by weight of the fired product (inorganic amorphous powder) is kneaded with 1512 parts by weight of the aforementioned unfired paper-making sludge, and a pressure of 3 kgf/cm² is applied while transferring the kneaded mass through a conveyor and drying is carried out by heating at 100°C to form a sheet-shaped body having a thickness of 10 mm. The sheet-shaped body is heated at 100°C to form a plate-shaped composite hardened body.

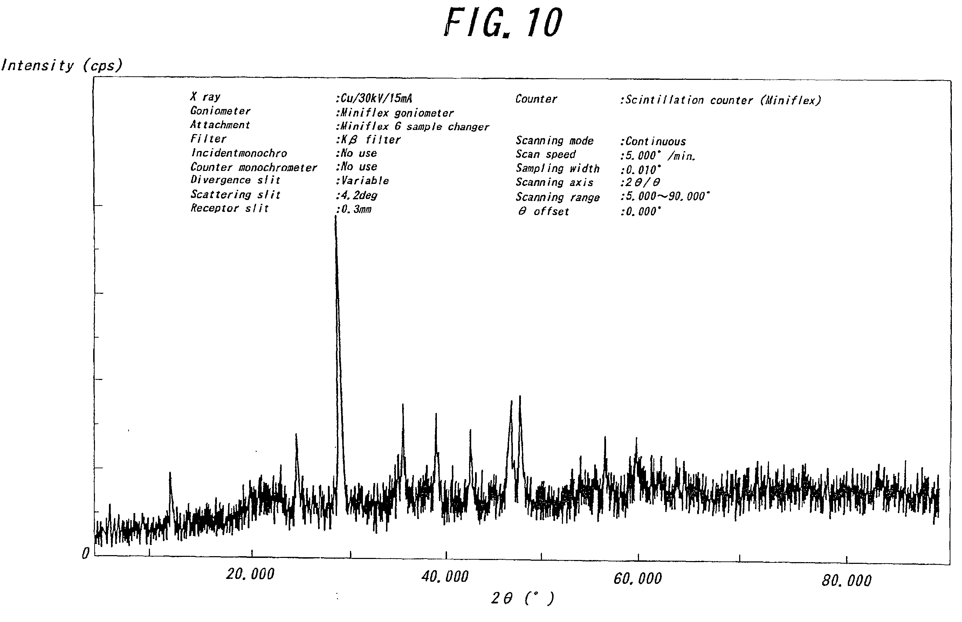

As to the composite hardened body, the crystalline structure is confirmed by an X-ray diffractometry. The X-ray diffraction chart is shown in Fig. 10. Moreover, the X-ray diffractometry is carried out by using MiniFlex made by Rigaku and Cu as a target. It is ascertained that the crystalline structure is included in the amorphous structure because a gentle undulation (harrow) is observed about 2θ: 22° and a peak indicating the crystalline structure is also observed. And also, Gehlenite,syn, Melitite-synthetic, Gehlenite-synthetic, Anorthite,ordered, CaCO₃ (calcite), kaolinite, SiO₂ are identified from the peaks.

On the other hand, 80% by weight of commercially available phenolic resin solution and an emulsion solution of 20% by weight of a latex as an elastic high polymer (solid content of SBR latex 49% by weight) are mixed at room temperature to obtain a liquid resin composition for providing a force durable to nail. Moreover, Nipol LX-436 made by Nippon Zeon Co., Ltd. is used as SBR latex.

Then, the above resin composition added with a curing agent is impregnated into a sheet-shaped glass fibers (impregnating amount converted to solid content 45%) and dried at a temperature of 80°C for 20 minutes to obtain a reinforcing sheet.

Further, the above reinforcing sheets are piled on the front and rear surfaces of the composite hardened body and the laminate is pressed at a temperature of 110°C under a pressure of 7 kgf/cm² for 20 minutes to obtain a composite building material consisting of a core member 5 having a thickness of 10 mm and a reinforcing layer 6 having a thickness of 1 mm on each of front and rear surfaces.

### (Example 1-3)

This example is fundamentally the same as Example 1-1, except that 248 parts by weight of the fired product of the paper-making sludge is kneaded with 1800 parts by weight of an unfired paper-making sludge and 5500 parts by weight of water, and the resulting slurry is shaped into a sheet-shaped body having a thickness of 15 mm while applying a pressure of 50 kgf/cm² (4.9 MPa) by a dehydration press process. The sheet-shaped body is dried by heating at 100°C to obtain a plate-shaped composite hardened body.

### (Example 1-4)

This example is fundamentally the same as Example 1-2, except that 248 parts by weight of the fired product of the paper-making sludge (including inorganic amorphous body and inorganic crystalline body) is kneaded with 1600 parts by weight of an unfired paper-making sludge and 5000 parts by weight of water, and the resulting slurry is shaped while applying a pressure of 75 kgf/cm² (7.35 MPa) by a dehydration press process and then dried by heating at 100°C to obtain a composite hardened body having a thickness of 20 mm.

### (Comparative Example 1-1)

Although the same reinforcing layer as in Examples 1-1 and 1-2 is arranged on each surface of a core member, a gypsum board having a thickness of 12 mm is used as the core member instead of the composite hardened body.

With respect to the composite building materials obtained by the above examples and comparative example, tests are made to measure bending strength, compression strength, workability and nail striking property. The results are shown in Table 1.

Moreover, the bending strength is measured according to a method defined in JIS A6901, and the compression strength is measured according to a method defined in JIS A5416, respectively. And also, the nail striking property is evaluated by striking a nail of 4 mm in diameter and 50 mm in length to measure presence or absence of crack.

**Table 1**

| | Example 1-1 | Example 1-2 | Example 1-3 | Example 1-4 | Comparative Example 1-1 |
|---|---|---|---|---|---|
| Bending strength (kgf/cm²) | 238 | 182 | 537 | 413 | 97 |
| Compression strength (kgf/cm²) | 851 | 817 | 891 | 734 | 753 |
| Nail striking property | no crack | no crack | no crack | no crack | crack |

### [Example 2]

### (Example 2-1)

There is provided 1512 g of an unfired paper-making sludge ("Green sludge" handled by Maruto Yozai-sha, solid content: 34% by weight, water content: 66% by weight). Then, a pressure of 3 kg/cm² is applied while transferring the paper-making sludge through a conveyor and drying is carried out by heating at 100°C to form a plate-shaped composite hardened body having a thickness of 10 mm.

The thus obtained composite hardened body is confirmed to have the following composition as converted to oxides as a result of an analysis using a fluorescent X-ray analyzing apparatus (RIX2100, made by Rigaku). Moreover, the pulp is measured from the weight reduction amount after being fired at 1100°C.

| Account | | | |
|---|---|---|---|
| Pulp | 51.4% by weight | SO₃ | 0.5% by weight |
| SiO₂ | 24.2% by weight | P₂O₅ | 0.2% by weight |
| Al₂O₃ | 14.0% by weight | Cl | 0.2% by weight |
| CaO | 8.0% by weight | ZnO | 0.1% by weight |
| MgO | 1.4% by weight | Others slight | |
| TiO₂ | 1.0% by weight | | |

On the other hand, 80% by weight of commercially available phenolic resin solution and an emulsion solution of 20% by weight of a latex as an elastic high polymer (solid content of SBR latex 49% by weight) are mixed at room temperature to obtain a liquid resin composition for providing a force durable to nail. Moreover, Nipol LX-436 made by Nippon Zeon Co., Ltd. is used as SBR latex.

Then, the above resin composition added with a curing agent is impregnated into a sheet-shaped glass fibers (impregnating amount converted to solid content 45%) and dried at a temperature of 80°C for 20 minutes to obtain a reinforcing sheet.

Further, the above phenolic resin solution is applied to front surface and rear surface of the above composite hardened body and dried at a temperature of 80°C for 20 minutes.

Then, the above reinforcing sheets are piled on the front and rear surfaces of the composite hardened body and the laminate is pressed at a temperature of 110°C under a pressure of 7 kgf/cm² for 20 minutes to obtain a composite body consisting of a core member having a thickness of 10 mm and a reinforcing layer having a thickness of 1 mm on each of front and rear surfaces.

Finally, a decorative panel (cryptomeria plate) having a thickness of 1 mm is adhered to each of both surfaces of the composite body with an adhesive of vinyl acetate to obtain a composite building material. The composite building material of Example 2-1 has a structure shown in Fig. 4.

### (Example 2-2)

There is provided 1512 parts by weight of an unfired paper-making sludge ("Green sludge" handled by Maruto Yozai-sha, solid content: 34% by weight, water content: 66% by weight). Then, the paper-making sludge is dried at 80°C with stirring and the dried mass is fired at 780°C for 5 hours and immediately quenched to room temperature. The fired product is pulverized in a ball mill to obtain 248 parts by weight of inorganic amorphous powder.

The thus obtained inorganic amorphous powder is confirmed to have the following composition as converted to oxides as a result of an analysis using a fluorescent X-ray analyzing apparatus (RIX2100, made by Rigaku).

| Account | | | |
|---|---|---|---|
| SiO₂ | 34.1% by weight | TiO₂ | 1.0% by weight |
| CaO | 21.3% by weight | SO₃ | 0.5% by weight |
| Al₂O₃ | 20.7% by weight | Cl | 0.2% by weight |
| Fe₂O₃ | 12.4% by weight | ZnO | 0.1% by weight |
| MgO | 5.9% by weight | Others slight | |
| P₂O₅ | 2.8% by weight | | |

Then, 248 g of the fired product (inorganic amorphous powder) is kneaded with 1512 g of the aforementioned unfired paper-making sludge, and a pressure of 3 kgf/cm² is applied while transferring the kneaded mass through a conveyor and drying is carried out by heating at 100°C to form a plate-shaped composite hardened body having a thickness of 10 mm.

As to the composite hardened body, the crystalline structure is confirmed by an X-ray diffractometry. The X-ray diffraction chart is shown in Fig. 10. Moreover, the X-ray diffractometry is carried out by using MiniFlex made by Rigaku and Cu as a target. It is ascertained that the crystalline structure is included in the amorphous structure because a gentle undulation (harrow) is observed about 2θ: 22° and a peak indicating the crystalline structure is also observed. And also, Gehlenite,syn, Melitite-synthetic, Gehlenite-synthetic and Anorthite,ordered are identified from the peaks.

On the other hand, there are provided a bleached kraft paper (basis weight 25 g/m²) for an overlay layer printed with a grained pattern, a bleached kraft paper (basis weight 80 g/m²) for a pattern layer printed with a pattern and a color, a bleached kraft paper (basis weight 80 g/m²) for a backer layer and a bleached kraft paper (basis weight 120 g/m²) for a core layer, wherein melamine resin is impregnated into the bleached kraft paper for the overlay layer, the bleached kraft paper for the pattern layer and the bleached kraft paper for the backer layer at impregnating ratios of 250%, 80% and 80%, respectively, and phenol resin is impregnated into the bleached kraft paper for the core layer at am impregnating ratio of 100%. Moreover, the impregnating ratio means a value (%) determined by (weight of resin impregnated/weight of kraft paper) x 100.

Finally, the bleached kraft paper for the backer layer, the bleached kraft paper for the core layer, the bleached kraft paper for the pattern layer and the bleached kraft paper for the overlay layer are successively placed on the front surface and the rear surface of the above plate-shaped composite hardened body, respectively, and integrally united by heating at a temperature of 150°C for 5 minutes while applying a pressure of 40 kgf/cm² to obtain a composite building material provided on both surfaces of the core member with the decorative plates.

The composite building material of Example 2-2 has a structure shown in Fig. 5.

### (Example 2-3)

This example is the same as Example 2-1, except that water is added to an unfired paper-making sludge (solid content 34% by weight, water content 66% by weight) to form a slurry having a solid content of 10% and then 5000 kg of this slurry is shaped into a sheet by a Fourdrinier paper method and dried by heating at 100°C to form a sheet-shaped body (hardened body) having a thickness of 10 mm.

Further, a phenolic resin solution is applied onto each of front and rear surfaces of the hardened body and dried at a temperature of 80°C for 20 minutes to obtain a composite hardened body likewise Example 2-1.

### (Example 2-4)

This example is fundamentally the same as in Example 2-2, except that 1512 kg of an unfired paper-making sludge (solid content: 34% by weight, water content: 66% by weight) is dried at 80°C with stirring and the dried mass is fired at 780°C for 5 hours and immediately quenched to room temperature. The fired product is pulverized in a ball mill to obtain 248 kg of inorganic amorphous powder.

Then, 200 parts by weight of the above inorganic amorphous body is kneaded with 2300 parts by weight of the unfired paper-making sludge, and a pressure of 15 kgf/cm² (1.47 MPa) is applied while transferring the kneaded mass through a conveyor and drying is carried out by heating at 100°C to form a plate-shaped composite hardened body having a thickness of 10 mm.

### (Comparative Example 2-1)

Although the same decorative layer as in Example 2-2 is arranged on each surface of a core member, a gypsum board having a thickness of 12 mm is used as the core member instead of the sheet-shaped body.

With respect to the composite building bodies obtained by the above examples and comparative example, tests are made to measure bending strength, compression strength and shock resistance. The results are shown in Table 2.

Moreover, the bending strength is measured according to a method defined in JIS A6901, and the compression strength is measured according to a method defined in JIS A5416, respectively. And also, the shock resistance is evaluated by dropping an iron ball of 530 kg from a height of 1 m to measure a struck depth.

**Table 2**

| | Example 2-1 | Example 2-2 | Example 2-3 | Example 2-4 | Comparative Example 2-1 |
|---|---|---|---|---|---|
| Bending strength (kgf/cm²) | 258 | 191 | 142 | 190 | 110 |
| Compression strength (kgf/cm²) | 860 | 735 | 873 | 738 | 760 |
| Struck depth (mm) | 0 | 0 | 0 | 0 | 5 |

### [Example 3]

### (Example 3-1)

While transferring 1512 g of an unfired paper-making sludge ("Green sludge" handled by Maruto Yozai-sha, solid content: 34% by weight, water content: 66% by weight) through a conveyor, a pressure of 3 kgf/cm² is applied to form a sheet-shaped body having a thickness of 10 mm. The sheet-shaped body is dried by heating at 100°C to form a plate-shaped hardened body.

The thus obtained hardened body is confirmed to have the following composition as converted to oxides as a result of an analysis using a fluorescent X-ray analyzing apparatus (RIX2100, made by Rigaku). Moreover, the pulp is measured from the weight reduction amount after being fired at 1100°C.

| Account | | | |
|---|---|---|---|
| Pulp | 51.4% by weight | TiO₂ | 1.0% by weight |
| SiO₂ | 24.2% by weight | SO₃ | 0.5% by weight |
| Al₂O₃ | 14.0% by weight | P₂O₅ | 0.2% by weight |
| CaO | 8.0% by weight | Cl | 0.2% by weight |
| MgO | 1.4% by weight | ZnO | 0.1% by weight |
| | | Others slight | |

And also, when a side face of the composite hardened body is observed by means of an optical microscope (50 magnification), the fibers are oriented in a direction perpendicular to the pressure applying direction.

Then, 80% by weight of commercially available phenolic resin solution and an emulsion solution of 20% by weight of a latex as an elastic high polymer (solid content of SBR latex 49% by weight) are mixed at room temperature to obtain a liquid resin composition for providing a force durable to nail. Moreover, Nipol LX-436 made by Nippon Zeon Co., Ltd. is used as SBR latex. Then, the above resin composition added with a curing agent is impregnated into a sheet-shaped glass fibers (impregnating amount converted to solid content 45%) and dried at a temperature of 80°C for 20 minutes to obtain a reinforcing sheet.

On the other hand, phenol resin is applied onto the front and rear surfaces of the hardened body and dried at a temperature of 80°C for 20 minutes. Then, the reinforcing sheets are piled on the front and rear surfaces of the composite hardened body and integrally united by pressing at a temperature of 110°C under a pressure of 7 kgf/cm² for 20 minutes to obtain a core member of 10 mm in thickness provided on its front and rear surfaces with a reinforcing layer having a thickness of 1 mm.

Furthermore, a composite sheet having a thickness of 2 mm is adhered to the reinforcing layer arranged on one surface of the core member with an adhesive of vinyl acetate to form a composite building material. Moreover, the composite sheet is prepared by applying a kneaded composition of 20 parts by weight of phenol resin and 300 parts by weight of copper powder to a film of polyethylene terephthalate (PET) and heating at 120°C for 1 hour and peeling off the PET film.

### (Example 3-2)

1512 g of an unfired paper-making sludge ("Green sludge" handled by Maruto Yozai-sha, solid content: 34% by weight, water content: 66% by weight) is dried at 80°C with stirring and the dried mass is fired at 780°C for 5 hours and immediately quenched to room temperature. Thereafter, the fired product is pulverized in a ball mill to obtain 248 g of inorganic amorphous powder.

The thus obtained inorganic amorphous powder is confirmed to have the following composition as converted to oxides as a result of an analysis using a fluorescent X-ray analyzing apparatus (RIX2100, made by Rigaku).

| Account | | | |
|---|---|---|---|
| SiO₂ | 34.1% by weight | P₂O₅ | 2.8% by weight |
| Al₂O₃ | 20.7% by weight | TiO₂ | 1.0% by weight |
| Fe₂O₃ | 12.4% by weight | SO₃ | 0.5% by weight |
| CaO | 21.3% by weight | Cl | 0.2% by weight |
| MgO | 5.9% by weight | ZnO | 0.1% by weight |
| | | Others slight | |

Then, 248 g of the inorganic amorphous powder is kneaded with 1512 g of the aforementioned unfired paper-making sludge, and a pressure of 3 kgf/cm² is applied while transferring the kneaded mass through a conveyor to form a sheet-shaped body having a thickness of 10 mm. An aluminum foil having a thickness of 1 mm is laminated on the sheet-shaped body and integrally united by heating at a temperature of 150°C under a pressure of 40 kgf/cm² for 5 minutes to form a composite building material wherein aluminum layers are formed on the front and rear surfaces of the core membe

As to the core member, the crystalline structure is confirmed by an X-ray diffractometry. The X-ray diffraction chart is shown in Fig. 10. Moreover, the X-ray diffractometry is carried out by using MiniFlex made by Rigaku and Cu as a target. It is ascertained that the crystalline structure is included in the amorphous structure because a gentle undulation (harrow) is observed about 2θ: 22° and a peak indicating the crystalline structure is also observed. And also, crystal bodies of CaCO₃ (calcite), kaolinite and SiO₂ in addition to crystals of Gehlenite, Melitite and Anorthite are identified from the peaks. The content of CaCO₃ per total weight of the core member is 9.8% by weight as a conversion value.

### (Example 3-3)

This example is fundamentally the same as Example 3-1, except that water is added to the paper-making sludge (solid content 48% by weight, water content 52% by weight) to form a slurry having a solid content of 15% by weight and 9000 kg of this slurry is shaped into a sheet-shaped body having a thickness of 10 mm by a well-known paper-making method. Then, the sheet-shaped body is dried by heating at 100°C to obtain a sheet-shaped body having a thickness of 20 mm.

### (Example 3-4)

This example is fundamentally the same as Example 3-2, except that 200 parts by weight of the above inorganic amorphous body is kneaded with 1800 parts by weight of an unfired paper-making sludge and 2300 parts by weight of water, and the resulting slurry is shaped while applying a pressure of 30 kgf/cm² (2.94 MPa) by a dehydration press process to obtain a plate-shaped body having a thickness of 25 mm.

### (Comparative Example 3-1)

In the composite building material of Example 3-1, a building material having the similar structure is prepared by using a gypsum board having a thickness of 12 mm.

With respect to the composite building materials obtained by the above examples and comparative example, tests are made to measure bending strength, compression strength, workability and nail striking property. The results are shown in Table 3. Moreover, the bending strength is measured according to a method defined in JIS A6901, and the compression strength is measured according to a method defined in JIS A5416, respectively. And also, the shock resistance is evaluated by dropping an iron ball of 530 g onto the composite building material from a height of 1 m to measure a struck depth.

**Table 3**

| | Example 3-1 | Example 3-2 | Example 3-3 | Example 3-4 | Comparative Example 3-1 |
|---|---|---|---|---|---|
| Bending strength (kgf/cm²) | 238 | 182 | 227 | 195 | 97 |
| Compression strength (kgf/cm²) | 851 | 817 | 830 | 827 | 753 |
| Shock resistance: depth (mm) | 0 | 0 | 0 | 0 | 5 |

### [Example 4]

### (Example 4-1)

There is provided 1512 parts by weight of an unfired paper-making sludge ("Green sludge" handled by Maruto Yozai-sha, solid content: 34% by weight, water content: 66% by weight) Then, the paper-making sludge is dried by heating at 100°C while transferring through a conveyor and applying a pressure of 3 kgf/cm² to obtain a plate-shaped composite hardened body having a thickness of 10 mm.

The thus obtained hardened body is confirmed to have the following composition as converted to oxides as a result of an analysis using a fluorescent X-ray analyzing apparatus (RIX2100, made by Rigaku). Moreover, the pulp is measured from the weight reduction amount after being fired at 1100°C.

| Account | | | |
|---|---|---|---|
| Pulp | 51.4% by weight | SO₃ | 0.5% by weight |
| SiO₂ | 24.2% by weight | P₂O₅ | 0.2% by weight |
| Al₂O₃ | 14.0% by weight | Cl | 0.2% by weight |
| CaO | 8.0% by weight | ZnO | 0.1% by weight |
| MgO | 1.4% by weight | Others slight | |
| TiO₂ | 1.0% by weight | | |

On the other hand, 80% by weight of commercially available phenolic resin solution and an emulsion solution of 20% by weight of a latex as an elastic high polymer (solid content of SBR latex 49% by weight) are mixed at room temperature to obtain a liquid resin composition for providing a force durable to nail. Moreover, Nipol LX-436 made by Nippon Zeon Co., Ltd. is used as SBR latex.

Then, the above resin composition added with a curing agent is impregnated into a sheet-shaped glass fibers (impregnating amount converted to solid content 45%) and dried at a temperature of 80°C for 20 minutes to obtain a reinforcing sheet.

Further, the above phenolic resin solution is applied to front surface and rear surface of the above composite hardened body and dried at a temperature of 80°C for 20 minutes.

Then, the above reinforcing sheets are piled on the front and rear surfaces of the composite hardened body and the laminate is pressed at a temperature of 110°C under a pressure of 7 kgf/cm² for 20 minutes to obtain a composite body consisting of a core member having a thickness of 10 mm and a reinforcing layer having a thickness of 1 mm on each of front and rear surfaces.

Finally, a water-resistant paper having a thickness of 0.3 mm is adhered to each of both surfaces of the composite body with an adhesive of vinyl acetate to obtain a composite building material.

The composite building material of Example 4-1 has a structure shown in Fig. 8.

### (Example 4-2)

There is provided 1512 parts by weight of an unfired paper-making sludge ("Green sludge" handled by Maruto Yozai-sha, solid content: 34% by weight, water content: 66% by weight). Then, the paper-making sludge is dried at 80°C with stirring and the dried mass is fired at 780°C for 5 hours and immediately quenched to room temperature. The fired product is pulverized in a ball mill to obtain 248 parts by weight of inorganic amorphous powder.

The thus obtained inorganic amorphous powder is confirmed to have the following composition as converted to oxides as a result of an analysis using a fluorescent X-ray analyzing apparatus (RIX2100, made by Rigaku).

| Account | | | |
|---|---|---|---|
| SiO₂ | 34.1% by weight | TiO₂ | 1.0% by weight |
| CaO | 21.3% by weight | SO₃ | 0.5% by weight |
| Al₂O₃ | 20.7% by weight | Cl | 0.2% by weight |
| Fe₂O₃ | 12.4% by weight | ZnO | 0.1% by weight |
| MgO | 5.9% by weight | Others slight | |
| P₂O₅ | 2.8% by weight | | |

Then, 248 parts by weight of the fired product (inorganic amorphous powder) is kneaded with 1512 parts by weight of the aforementioned unfired paper-making sludge, and a pressure of 3 kgf/cm² is applied while transferring the kneaded mass through a conveyor and drying is carried out by heating at 100°C to form a plate-shaped composite hardened body having a thickness of 10 mm.

As to the composite hardened body, the crystalline structure is confirmed by an X-ray diffractometry. The X-ray diffraction chart is shown in Fig. 10. Moreover, the X-ray diffractometry is carried out by using MiniFlex made by Rigaku and Cu as a target. It is ascertained that the crystalline structure is included in the amorphous structure because a gentle undulation (harrow) is observed about 2θ: 22° and a peak indicating the crystalline structure is also observed. And also, Gehlenite,syn, Melitite-synthetic, Gehlenite-synthetic and Anorthite,ordered are identified from the peaks.

On the other hand, there are provided a bleached kraft paper (basis weight 25 g/m²) for an overlay layer printed with a grained pattern, a bleached kraft paper (basis weight 80 g/m²) for a pattern layer printed with a pattern and a color, a bleached kraft paper (basis weight 80 g/m²) for a backer layer and a bleached kraft paper (basis weight 120 g/m²) for a core layer, wherein melamine resin is impregnated into the bleached kraft paper for the overlay layer, the bleached kraft paper for the pattern layer and the bleached kraft paper for the backer layer at impregnating ratios of 250%, 80% and 80%, respectively, and phenol resin is impregnated into the bleached kraft paper for the core layer at am impregnating ratio of 100%. Moreover, the impregnating ratio means a value (%) determined by (weight of resin impregnated/weight of kraft paper) × 100.

Finally, the bleached kraft paper for the backer layer, the bleached kraft paper for the core layer, the bleached kraft paper for the pattern layer and the bleached kraft paper for the overlay layer are successively placed on the front surface and the rear surface of the above plate-shaped composite hardened body, respectively, and integrally united by heating at a temperature of 150°C for 5 minutes while applying a pressure of 40 kgf/cm² to obtain a composite building material provided on both surfaces of the core member with the decorative plates.

The composite building material of Example 4-2 has a structure shown in Fig. 9.

### (Comparative Example 4-1)

Although the same decorative layer as in Example 4-2 is arranged on each surface of a core member, a gypsum board having a thickness of 12 mm is used as the core member instead of the sheet-shaped body.

With respect to the composite building bodies obtained by the above examples and comparative example, tests are made to measure bending strength, compression strength and water resistance. The results are shown in Table 4.

Moreover, the bending strength is measured according to a method defined in JIS A6901, and the compression strength is measured according to a method defined in JIS A5416, respectively. And also, the water resistance is evaluated according to a method defined in JIS A6901 after water is absorbed according to JIS A1437.

**Table 4**

| | Example 4-1 | Comparative Example 4-1 |
|---|---|---|
| Bending strength (kgf/cm²) | 353 | 63 |
| Compression strength (kgf/cm²) | 860 | 385 |
| Water resistance (kgf/cm²) | 286 | 24 |

### INDUSTRIAL APPLICABILITY

The composite hardened bodies according to the invention are excellent in not only the productivity but also the bending strength and compression strength, and workability and productivity and having a high bending strength, and can cheaply provide building materials capable of striking nails without causing crack.

Moreover, the invention is not restricted to the constructions of the above examples and includes a range of being properly modified by those skilled in the art within the scope of claims. For example, the core member in t he composite building material according to the invention further contains a material other than the above composite hardened body.

And also, the invention can cheaply provide building materials not degrading design even if shock is applied.

Further, the composite building material having the electromagnetic wave shielding layer according to the invention is excellent in the fire resistance and bending workability, high in the compression strength and excellent in the shock resistance, so that the electromagnetic wave shielding layer is not broken by shock. Therefore, there can be provided composite building materials suitable as a wall member or a floor member for a room setting up OA instruments, intensive care unit in a hospital or the like.

Furthermore, the composite building material having a paper layer according to the invention can provide a building material having an excellent water resistance when a water-resistance paper is particularly attached to a core member.

## Claims

1. A composite building material comprising a composite layer consisting of a fibrous substrate and a resin formed on at least one surface of a core member, **characterized in that** the core member comprises an inorganic amorphous body and fibrous materials are included in the inorganic amorphous body.

2. A composite building material comprising a composite layer consisting of a fibrous substrate and a resin formed on at least one surface of a core member, **characterized in that** the core member is shaped from inorganic amorphous powder made of an inorganic amorphous body through a binder.

3. A composite building material comprising a composite layer consisting of a fibrous substrate and a resin formed on at least one surface of a core member, **characterized in that** the core member includes an organic fibrous materials consisting of a polysaccharide.

4. A composite building material according to any one of claims 1 to 3, wherein a content of the resin in the composite layer is 20-200 parts by weight based on 100 parts by weight of the fibrous substrate.

5. A composite building material according to any one of claims 1 to 3, wherein a thickness of the composite layer is 0.1-3.5 mm.

6. A composite building material according to any one of claims 1 to 3, wherein a specific gravity of the composite layer is 0.5-3.9.

7. A composite building material according to any one of claims 1 to 3, wherein the composite layer contains an elastic high polymer.

8. A composite building material comprising a decorative layer formed on at least one surface of a core member, **characterized in that** the core member comprises an inorganic amorphous body and fibrous materials are included in the inorganic amorphous body.

9. A composite building material comprising a decorative layer formed on at least one surface of a core member, **characterized in that** the core member is shaped from inorganic amorphous powder made of an inorganic amorphous body through a binder.

10. A composite building material comprising a decorative layer formed on at least one surface of a core member, **characterized in that** the core member includes an organic fibrous materials consisting of a polysaccharide.

11. A composite building material according to any one of claims 8 to 11, wherein a reinforcing layer is formed between the core member and the decorative layer.

12. A composite building material according to any one of claims 8 to 11, wherein a thickness of the decorative layer is 0.1-10 mm.

13. A composite building material according to claim 11, wherein the reinforcing layer contains an elastic high polymer.

14. A composite building material according to claim 8 or 10, wherein the fibrous materials are oriented in a particular direction.

15. A composite building material comprising an electromagnetic wave shielding layer formed on at least one surface of a core member, **characterized in that** the core member comprises an inorganic amorphous body and fibrous materials are included in the inorganic amorphous body.

16. A composite building material comprising an electromagnetic wave shielding layer formed on at least one surface of a core member, **characterized in that** the core member is shaped from inorganic amorphous powder made of an inorganic amorphous body through a binder.

17. A composite building material comprising an electromagnetic wave shielding layer formed on at least one surface of a core member, **characterized in that** the core member includes an organic fibrous materials consisting of a polysaccharide.

18. A composite building material according to claim 15 or 17, wherein the fibrous materials are oriented in a particular direction.

19. A composite building material according to any one of claims 15 to 18, wherein the electromagnetic wave shielding layer is a metal foil.

20. A composite building material according to any one of claims 15 to 18, wherein the electromagnetic wave shielding layer is a composite sheet consisting of a conductive filler and a resin.

21. A composite building material comprising a paper adhered on at least one surface of a core member, **characterized in that** the core member comprises an inorganic amorphous body and fibrous materials are included in the inorganic amorphous body.

22. A composite building material comprising a paper adhered on at least one surface of a core member, **characterized in that** the core member is shaped from inorganic amorphous powder made of an inorganic amorphous body through a binder.

23. A composite building material comprising a paper adhered on at least one surface of a core member, **characterized in that** the core member includes an organic fibrous materials consisting of a polysaccharide.

24. A composite building material according to any one of claims 21 to 23, wherein the paper is a waterproof paper.

25. A composite building material according to claim 21 or 23, wherein the fibrous materials are oriented in a particular direction.
